# EUROPEAN PATENT SPECIFICATION

(11) **EP 2 566 655 B1**
(45) Date of publication and mention of the grant of the patent: **30.05.2018**
(21) Application number: 10744878.9
(22) Date of filing: 04.08.2010
(51) Int. Cl.: B21J 1/04, F02F 3/22, B23P 15/10, B21K 1/18, F02F 3/00

(54) **PISTON ASSEMBLY MULTIPLE STEP FORMING PROCESS**
VERFAHREN ZUR HERSTELLUNG EINER KOLBENANORDNUNG IN MEHREREN SCHRITTEN
PROCESSUS DE FORMATION DE PISTON EN PLUSIEURS ÉTAPES

(30) Priority: 05.08.2009 US 536144
(43) Date of publication of application: 13.03.2013
(73) Proprietor: MAHLE International GmbH, 70376 Stuttgart (DE); Mahle Industries, Incorporated, Farmington Hills, MI 48335 (US)
(72) Inventor: REIN, Wolfgang, O., Milford MI 48380 (US)
(74) Representative: BRP Renaud & Partner mbB Rechtsanwälte Patentanwälte Steuerberater
(86) International application number: PCT/EP2010/004773
(87) International publication number: WO 2011/015351

(56) References cited:
- EP-A2- 1 247 600
- WO-A1-90/04711
- JP-A- 57 195 552
- US-A- 3 222 761
- SCHNITZLER V ET AL: "SCHMIEDESTUCKE AUF MASS BEARBEITEN" WERKSTATT UND BETRIEB, CARL HANSER VERLAG GMBH & CO. KG, DE, vol. 128, no. 1/02, 1 February 1995 (1995-02-01), pages 30-32, XP000482638 ISSN: 0043-2792

## Description

The present disclosure relates to a multiple step forming process for producing a piston.

### BACKGROUND

Pistons, and in particular piston crowns, are typically manufactured either by casting or forging. Forged piston crowns include different material properties when compared to cast piston crowns. For example, forged piston crowns tend to have a greater material density than cast piston crowns, making forged piston crowns more desirable than cast piston crowns in at least some applications. However, forging a piston crown can be more time consuming and costly to manufacture than utilizing a casting operation. In one type of forging process, a billet is placed in a press and forged by a die into an approximate shape of the piston crown in a single stroke. After forging, the piston crown may be machined to create features such as the cooling gallery, ring grooves and the drain passages, and then finish machined to the final dimensions. In another type of forging process, the billet is placed in a press and is formed into a final shape by exerting multiple strokes on the billet using the same die. However, the final shape may not be accurate enough for production, and the piston crown may still need extensive machining.

Document EP1247600A2 discloses a method of manufacturing an entire piston, piston heads for example, especially intended for internal combustion engines, wherein in an initial manufacturing step a blank that will eventually constitute the piston is preliminarily forged along a prescribed axis, shaping appropriate contours, and wherein in at least one subsequent manufacturing step the preliminarily shaped piston is finally forged along at least one other axis, creating additional contours.

Machining can be a labor intensive process that may become costly. It may also be difficult to produce forged piston crowns at high volumes, as machining can become time-consuming. Finally, machining results in wasted material. Producing a near net shaped part reduces the amount of machining necessary to achieve the final dimensions of the piston crown.

Therefore, there exists a need to provide a method of producing a near net shaped piston crown utilizing a forging process and then utilizing the piston crown to complete a piston assembly.

### BRIEF DESCRIPTION OF THE DRAWINGS

FIG. 1 is a partial cross sectional view of a piston assembly including a piston skirt and a piston crown that are joined together;
FIG. 2A is an illustration of an exemplary billet;
FIG. 2B is an illustration of the billet in FIG. 2A being upset in a first station;
FIG. 2C is an illustration of the billet being pre-formed into an intermediate configuration of a piston crown in a second station;
FIG. 2D is an illustration of the intermediate configuration of the piston crown being formed into a final configuration of the piston crown in a third station;
FIG. 2E is an illustration of the final configuration of the piston crown being precision forged into a near net shaped piston crown in a fourth station; and
FIG. 3 is a process flow of an exemplary piston assembly forming process.

### DETAILED DESCRIPTION

Referring now to the discussion that follows and also to the drawings, illustrative approaches to the disclosed systems and methods are shown in detail. Although the drawings represent some possible approaches, the drawings are not necessarily to scale and certain features may be exaggerated, removed, or partially sectioned to better illustrate and explain the present disclosure. Further, the descriptions set forth herein are not intended to be exhaustive or otherwise limit or restrict the claims to the precise forms and configurations shown in the drawings and disclosed in the following detailed description.

Moreover, a number of constants may be introduced in the discussion that follows. In some cases illustrative values of the constants are provided. In other cases, no specific values are given. The values of the constants will depend on characteristics of the associated hardware and the interrelationship of such characteristics with one another as well as environmental conditions and the operational conditions associated with the disclosed system.

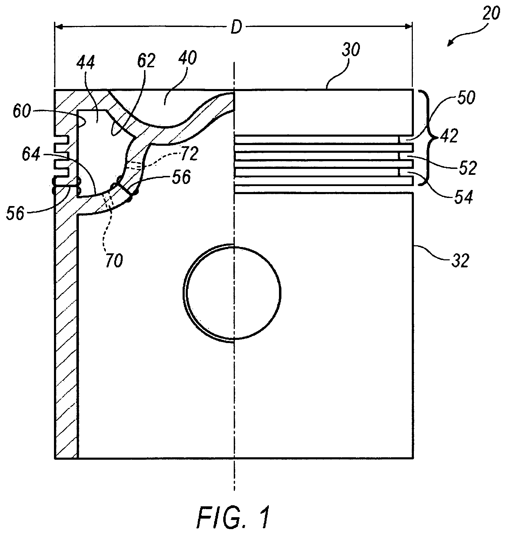

FIG. 1 illustrates an exemplary piston assembly 20 including a piston crown 30 and a piston skirt 32. The piston assembly 20 includes the piston crown 30 fixedly joined to the piston skirt. In the illustration of FIG. 1, the piston crown 30 and the piston skirt are joined together by a friction weld 56; however other types of joining processes such as beam welding, laser welding or mechanical fastening with one of more bolts or screws may be used as well. The piston crown 30 includes a combustion bowl 40, a ring belt portion 42 and a cooling gallery 44. The ring belt portion 42 includes a plurality of ring grooves for receiving a piston ring (not illustrated). In particular, the ring belt portion 42 may include a first ring groove 50, a second ring groove 52 and a third ring groove 54, where the third ring groove receives an oil control ring.

The cooling gallery 44 may be located within the piston assembly 20, and may include a cooling gallery surface 60, where the cooling gallery surface is defined at least in part by an inner wall 62 of the piston crown 30 and an inner wall 64 of the piston skirt 32. The cooling gallery 44 may also include one or more fluid inlet apertures 70 and one or more fluid outlet apertures 72.

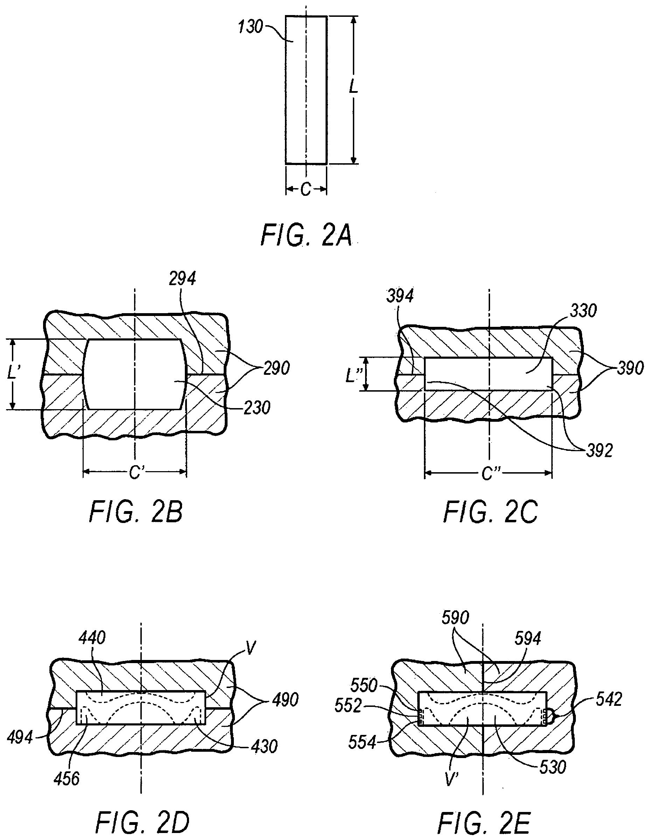

In one exemplary illustration, the piston crown 30 and the piston skirt 32 may be constructed from different materials. For example, the piston crown 30 may be constructed from a different grade steel material than the piston skirt 32. More specifically, the steel used for the piston crown 30 may include different mechanical properties, such as yield point, tensile strength, or notch toughness, than the piston skirt 32. The piston crown 30 also includes an outer diameter D, where the finished diameter D is usually less than about 200 mm (about 7.87 inches). This is because the multiple step forging process used to produce the piston crown 30 and discussed in more detail below may have a limited amount of force and energy that can be exerted on the piston crown 30. Therefore, the diameter D of the piston crown 30 produced by the process illustrated in FIGs. 2A-2E may be limited in size.

The piston crown 30 may be created by a multiple step forging process that utilizes at least two different forming stations, which is illustrated in an exemplary manner generally in FIGs. 2A-2E. The multiple step forging process produces a near net shaped piston crown 530. The near net shaped piston crown 530 may be fixedly joined to the piston skirt 32, and then finish machined, resulting in the piston assembly 20 illustrated in FIG. 1. In one exemplary illustration, the multiple step forging process may be performed by a single machine in an automatic hot forging process.

While three stations are illustrated, there may be fewer or more stations depending on the nature of the piston crown. Further, while the stations represent discrete hot forging operations, the stations may be part of an overall forming mechanism assembly. In another illustration of the multiple step forging process, the billet 130 can be heated to a warm forging temperature as well. Alternatively, the billet 130 can be cold forged as well too, without the need to heat the metal alloy prior to forming.

As illustrated in FIG. 2A a piston crown billet 130 may be provided, where the piston billet 130 includes a length L and a cross section C. The billet 130 may be created by feeding a bar of stock material into a forming mechanism assembly and shearing the bar to the length L. In one illustration, shearing may be done by a cutter that slices off the billet from a bar of stock.

If a hot forging process is used then prior to creating the billet 130 the bar of stock may be heated to a predetermined forging temperature before it is shorn to length L. Alternatively, the billet 130 itself may be heated to the desired forging temperature after being shorn at a lower temperature. In either case, the hot forging temperature is typically a temperature above the recrystallization temperature of a specified metal. For example, a type of steel based metal alloy may have a hot forging temperature of about 1095°C to about 1150°C (2003°F to about 2102°F). However, other types of metal alloys, such as an aluminum alloy, may be used as well.

The billet 130 may be carried from the shearing station to a first station illustrated in FIG. 2B. In one illustration, the shearing station and the first station are part of the same forming mechanism assembly. At first station the billet 130 is formed to generally decrease the length L to a second length L', and to increase the cross section C to a second cross section C', thereby creating a billet 230. More specifically, the billet 230 can be forged by upsetting the billet 130 and generally decreasing the length L to second length L', and increasing the cross section C to second cross section C'. In one approach as shown in FIG. 2B the first forming station includes a set of closed first dies 290 having a sealing line 294. Upsetting the billet 230 inside of closed first dies 290 may improve material distribution and concentricity of the finished piston crown 30, especially when compared to a billet produced by open dies.

Turning to FIG. 2C, the billet 230 is pre-formed into an intermediate configuration of the piston crown 330 at a second forming station. That is, the piston crown 330 is in a preliminary shape of the final near net shaped piston crown 530. More specifically, the billet 230 may be pre-formed into an intermediate configuration of the piston crown 330. The piston crown 330 is in a preliminary shape of the final near net shaped piston crown 530 (illustrated in FIG. 2E). Pre-forming the piston crown 330 involves shaping the piston crown 330 to a predetermined size and contour prior to subsequent forging operations, and may involve operations such as, for example, flattening or edging. In the illustration of FIG. 2C, the piston crown 330 may be further flattened from the second cross section C' to a third cross section C", and the second length L' may be further decreased to a third length L". Also, edges 392 may also be created during the pre-forming stage as well.

The pre-forming of the piston crown 330 may be performed by a closed set of second dies 390 with a sealing line 394. The use of closed dies allows for the finished piston crown 530 to be closer to a near net shape than the use of open dies. In the illustration of FIGs. 2B and 2C, the first dies 290 are separate components from the second dies 390. That is, the billet 130 is moved from the first station to the second station.

Then, referring to FIG. 2D, the intermediate configuration of the piston crown 330 is formed into a generally final shape as represented by piston crown 430 at a third forming station. Once again, a set of closed third dies 490 with a sealing line 494 may be used at the third forming station although open dies may be used under some circumstances. Forming of the piston crown 430 may involve forging several different features of the piston crown 430, such as, for example, a combustion bowl 440 and a cooling gallery 456. The generally final shape of the piston crown 430 may also include a predetermined volume of material, which is illustrated as a predetermined volume V.

The cooling gallery 456 of the piston crown 430 is created by a coining operation. In one illustration, the coining operation may be performed while the piston crown 430 is still heated to near the hot forging temperature. The coining may also be performed on any surface of the piston crown 430 that is generally parallel to the sealing line 494 that is created by the closed third dies 490 of the third forming station.

FIG. 2E illustrates a near net shaped piston crown 530, where the final shape of the piston crown 430 has been precision hot forged into the near net shaped piston crown 530. A precision forging process may be used in an effort to produce more precise tolerances than normally produced by typical forging process. The near net shaped piston crown 530 may include the near net shaped volume V'. The predetermined volume V (illustrated in FIG. 2D) is approximately equal to the near net shaped volume V' (illustrated in FIG. 2E). In one illustration of the near net shaped piston crown 530, a ring belt portion 542 may be included. Specifically, at least one of a first ring groove 550, a second ring groove 552 and a third ring groove 554 of the ring belt portion 542 may be created during the precision forging process.

In the illustration of FIG. 2E, a fourth station includes a set of fourth dies 590, which once again are shown as closed dies, and may be positioned to be generally parallel with the features created by the forming process. That is, the fourth dies 590 may be generally parallel with at least one of the first ring groove 550, the second ring groove 552 and the third ring groove 554 of the ring belt portion 542. The fourth dies 590 are illustrated as having a sealing line 594 generally at right angles to corresponding sealing lines of 294, 394 and 494 for the dies 290, 390 and 490 illustrated in FIGS. 2B through 2D.

The near net shaped part 530 is then machined. The machined net shaped part 530 is then fixedly joined to the piston skirt 32 using any one of a number of known approaches discussed above. The piston assembly may then potentially undergo a finish machining operation to produce the piston assembly 20 illustrated in FIG. 1. Turning, milling, grinding, and honing are exemplary operations typically used to obtain precise dimensions and surfaces in cylindrical parts such as pistons, but other types of finish machining operation may also be implemented.

As previously noted, in the illustrations of FIGs. 2D and 2E, the predetermined volume V of the piston crown 430 is approximately equal to the near net shaped volume V' of the near net shaped piston crown 530. This means that minimal material waste may be generated to produce the near net shaped piston crown 530. In contrast, some other types of forged parts might require a piercing operation for creating a through hole. Creating the through hole results in a separate punch-out from the forged part, which is usually treated as scrap metal. In another example, some types of forged parts may include flash needs to be removed in a subsequent material removal process, which also results in scrap metal. Therefore, another advantage of the multiple step forming process is that the near net shaped piston crown 530 may produce minimal scrap material.

In one exemplary illustration of the multiple step forging process illustrated in FIGs. 2A-2E, the first forming station, the second forming station, the third forming station and the fourth forming station are separate components from one another, but are each part of the same forming mechanism assembly, which could be a single machine. In this illustration, the piston crown is automatically transferred from one forging station to the next. In particular, the multiple step forging process may be an automatic hot forging process that forges the near net shaped piston crown 530 from the billet 130 by a single machine. The automatic hot forging process may be performed such that a bar of stock that is sheared to produce the billets 130 may be fed into an entry side of an exemplary automatic hot forging machine. The near net shaped piston crowns 530 may be produced on the exit end of the exemplary automatic hot forging machine. In this illustration, each of the closed dies 290, 390, 490 and 590 in the forming stations of the automatic hot forging machine may be heated as well in an effort to maintain forging temperatures.

Producing the piston crown 30 using a multiple step forming process to produce a near net shaped part 530 may be advantageous for several reasons. Multi-stage forming processes using more than one die tend to result in parts that have tighter tolerance ranges as well as improved reproducibility when compared to parts produced with a single stage cavity using multiple strokes to create a finished part. At least some forged piston crowns that are currently available are produced using a single stage die. These types of forged piston crowns may need extensive machining to produce a finished piston crown. Moreover, piston crowns produced by single stage cavities do not generally allow for more complex forming processes, such as, for example, coining operations. This means that a single stage die can not form certain features of the piston crown, such as the cooling gallery, and these features may need to be machined. Single stage forming in the same die using multiple strokes may also require longer cycle times than multi stage forming processes using different dies. Therefore, parts produced by multiple step forming processes may result in higher volumes than parts produced by a single stage die, due to decreased cycle times.

In one preferred illustration, the near net shaped piston crown 530 may be produced by a type of automatic hot forging machine that is a Hatebur type forging machine. A Hatebur type forging machine is a multi-stage metal working machine that automatically transfers parts from one metal forging station to the next. That is, the Hatebur type forging machine transfers parts without the need for an operator to manually remove the parts from one station and place them in the next station. Automatically transferring parts from one station to the next reduces cycle time. Thus, parts produced by a Hatebur type forging machine tend to include reduced cycle times when compared to forged parts produced by other types of forging processes.

The multi stage forming process illustrated in FIGs. 2A-2E results in a near net shaped piston crown 530. Near net forgings are usually forged as closely as possible to the required dimensions of the finished part so that most surfaces require reduced machining when compared to parts forged by traditional forging processes. In one illustrative example of a near net forging, the near net forging requires about 0.76 mm (0.03 inches) or less of material removal from any functional surface of the forging. As a result, near net shaped parts result in less machining and potentially fewer machining steps to produce a finished product. Moreover, near net shaped forgings also reduce the amount of material removed to create the finished product, as near net forging do not typically include flash and are closer to the finished tolerances when compared to traditional forgings. Thus, while some machining may be performed to prepare the near net piston crown 530 for a joining process the piston crown requires reduced machining when compared to parts forged by traditional forging processes to create the final piston crown 30.

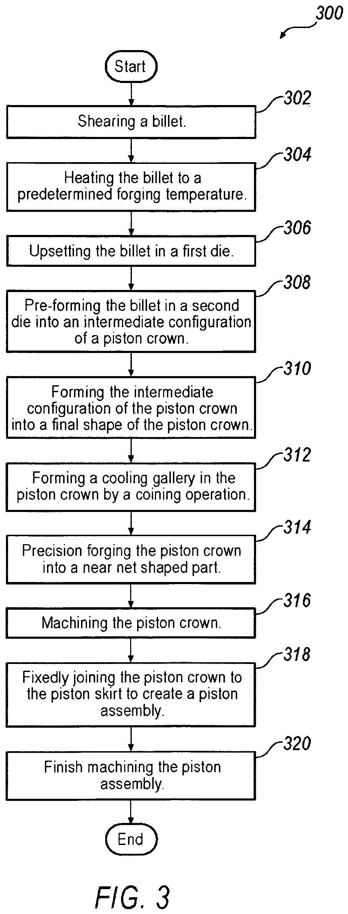

With specific reference to FIG. 3, an exemplary process 300 for creating the piston assembly 20 using a near net shaped piston crown 530 is described. Process 300 generally begins at step 302. In step 302, a billet is sheared into a predetermined billet volume. Process 300 may then continue to step 304.

In step 304, the billet 130 can be heated to a predetermined forging temperature. For example, the predetermined forging temperature may be the hot forging temperature of a metal. Moreover, the billet 130 can be cold forged as well too, without the need to heat the metal alloy prior to forming. Therefore, step 304 may be optional. Process 300 may then continue to step 306.

In step 306, the billet 130 is upset in a first station using a set of first dies 290 as discussed above, to generally decrease the length L to a second length L', and to increase the cross section C to a second cross section C'. Next, in step 308, the billet 230 is pre-formed in a second station using a set of second dies 390 into an intermediate configuration of a piston crown 330. Process 300 may then proceed to step 310.

In step 310, the piston crown 330 is formed into a generally final shape of the piston crown 430. In step 312, a cooling gallery 456 may be created by a coining operation, where the coining operation is part of the forming to create the final shape of the piston crown 430. Process 300 may then proceed to step 314. In step 314, the piston crown 430 is precision forged into a near net shaped piston crown 530. Process 300 may then proceed to step 316. In step 316, the near net shaped piston crown 530 may be machined. That is, the piston crown may be machined to prepare the piston crown 530 for joining to a piston skirt. Process 300 may then proceed to step 318.

In step 318, the piston crown 530 is fixedly joined to a piston skirt, such as the piston skirt 32 illustrated in FIG. 1, thereby creating the piston assembly 20. Finally, in step 320, both of the piston crown 530 and the piston skirt may undergo a finish machining operation. Process 300 may then terminate.

Although the steps of the method of process 300 are listed in an exemplary order, the steps may be performed in differing orders. Furthermore, as noted above, one or more steps may be eliminated and other exemplary forging steps may be added between the initial stage and the final stage.

The present disclosure has been particularly shown and described with reference to the foregoing illustrations, which are merely illustrative of the best modes for carrying out the disclosure. It should be understood by those skilled in the art that various alternatives to the illustrations of the disclosure described herein may be employed in practicing the disclosure without departing from scope of the disclosure as defined in the following claims. It is intended that the following claims define the scope of the disclosure and that the method and apparatus within the scope of these claims and their equivalents be covered thereby.

## Claims

1. A method of creating a piston crown (530), comprising:
- providing a billet (130) including a length (L) and a cross section (C);
- upsetting the billet (130) in a first station including a set of first closed dies (290) to decrease the length (L) of the billet (130) to a second length (L') and increase the cross section (C) of the billet (130) to a second cross section (C'), resulting in a second billet (230);
- pre-forming the second billet (230) in a second station including a set of second closed dies (390) to decrease the second length (L') of the second billet (230) to a third length (L"), to increase the second cross section (C') of the second billet (230) to a third cross section (C") and to create edges (392), resulting in a third billet (330), wherein the first station and the second station are separate components;
- forming the third billet (330) to a piston crown (430) in a third station including a set of third closed dies (490), the piston crown (430) comprising a predetermined volume (V) of material;
- forming a cooling gallery in the piston crown (430) by a coining operation, wherein the coining operation is included with the forging of the piston crown (430);
- precision-forming the piston crown (430) into a near net shape piston crown (530) in a forth station including a set of forth closed dies (590), the piston crown (530) comprising a near net shape volume (V') of material.

2. The method as recited in claim 1, comprising shearing a bar of stock into the billet (130).

3. The method as recited in claim 1, comprising heating the billet (130) to a predetermined forging temperature.

4. The method as recited in claim 1, comprising advancing the piston crown through the first station, second station, third station and forth station, wherein each of the first station, second station, third station and forth station are part of a single forming mechanism assembly.

5. The method as recited in claim 1, wherein the third station is a separate component from the forth station.

6. The method as recited in claim 1, wherein a finished diameter of the piston crown is about less than 200 millimeters.

## Patentansprüche

1. Verfahren zum Erzeugen eines Kolbenbodens (530), umfassend:
- Bereitstellen eines Rohlings (130), der eine Länge (L) und einen Querschnitt (C) aufweist;
- Bereitstellen des Rohlings (130) in einer ersten Station, die einen Satz erster geschlossener Matrizen (290) aufweist, um die Länge (L) des Rohlings (130) auf eine zweite Länge (L') zu kürzen und den Querschnitt (C) des Rohlings (130) auf einen zweiten Querschnitt (C') zu erweitern, wodurch ein zweiter Rohling (230) entsteht;
- Vorformen des zweiten Rohlings (230) in einer zweiten Station, die einen Satz zweiter geschlossener Matrizen (390) aufweist, um die zweite Länge (L') des zweiten Rohlings (230) auf eine dritte Länge (L") zu kürzen, den zweiten Querschnitt (C') des zweiten Rohlings (230) auf einen dritten Querschnitt (C") zu erweitern und Kanten (392) zu erzeugen, wodurch ein dritter Rohling (330) entsteht, wobei die erste Station und die zweite Station separate Komponenten sind;
- Formen des dritten Rohlings (330) zu einem Kolbenboden (430) in einer dritten Station, die einen Satz dritter geschlossener Matrizen (490) aufweist, wobei der Kolbenboden (430) ein vorbestimmtes Volumen (V) an Material umfasst;
- Formen einer Kühlungsgallerie in dem Kolbenboden (430) durch einen Prägevorgang, wobei der Prägevorgang zum Schmieden des Kolbenbodens (430) gehört;
- Präzisionsformen des Kolbenbodens (430) zu einem annähernd netzförmigen Kolbenboden (530) in einer vierten Station, die einen Satz vierter geschlossener Matrizen (590) aufweist, wobei der Kolbenboden (530) ein nahezu netzförmiges Volumen (V') an Material umfasst.

2. Verfahren nach Anspruch 1, umfassend das Abscheren eines Vorratsbalkens in den Rohling (130).

3. Verfahren nach Anspruch 1, umfassend das Erwärmen des Rohlings (130) auf eine vorbestimmte Schmiedetemperatur.

4. Verfahren nach Anspruch 1, umfassend das Vorschieben des Kolbenbodens durch die erste Station, die zweite Station, die dritte Station und die vierte Station, wobei jede von erster Station, zweiter Station, dritter Station und vierter Station Teil einer einzigen Formmechanismusanordnung ist.

5. Verfahren nach Anspruch 1, wobei die dritte Station eine von der vierten Station separate Komponente ist.

6. Verfahren nach Anspruch 1, wobei ein fertiger Durchmesser des Kolbenbodens ungefähr weniger als 200 Millimeter beträgt.

## Revendications

1. Procédé de création d'une calotte de piston (530), comprenant :
- la fourniture d'une billette (130) incluant une longueur (L) et une section transversale (C) ;
- le refoulement de la billette (130) dans un premier poste incluant un ensemble de premières matrices fermées (290) pour diminuer la longueur (L) de la billette (130) à une deuxième longueur (L') et augmenter la section transversale (C) de la billette (130) à une deuxième section transversale (C'), résultant en une deuxième billette (230) ;
- la préformation de la deuxième billette (230) dans un deuxième poste incluant un ensemble de secondes matrices fermées (390) pour diminuer la deuxième longueur (L') de la deuxième billette (230) à une troisième longueur (L"), pour augmenter la deuxième section transversale (C') de la deuxième billette (230) à une troisième section transversale (C") et pour créer des arêtes (392), résultant en une troisième billette (330), dans lequel le premier poste et le deuxième poste sont des composants séparés ;
- la formation de la troisième billette (330) en une calotte de piston (430) dans un troisième poste incluant un ensemble de troisièmes matrices fermées (490), la calotte de piston (430) comprenant un volume prédéterminé (V) de matériau ;
- la formation d'une galerie de refroidissement dans la calotte de piston (430) par une opération de matriçage, dans lequel l'opération de matriçage est incluse avec le forgeage de la calotte de piston (430) ;
- la formation avec précision de la calotte de piston (430) en une calotte de piston à la forme quasi nette (530) dans un quatrième poste incluant un ensemble de quatrièmes matrices fermées (590), la calotte de piston (530) comprenant un volume quasi net (V') de matériau.

2. Procédé selon la revendication 1, comprenant le cisaillement d'une barre de matière pour obtenir la billette (130).

3. Procédé selon la revendication 1, comprenant le chauffage de la billette (130) à une température de forgeage prédéterminée.

4. Procédé selon la revendication 1, comprenant l'avance de la calotte de piston par le premier poste, deuxième poste, troisième poste et quatrième poste, dans lequel chacun des premier poste, deuxième poste, troisième poste et quatrième poste sont des parties d'un seul ensemble de mécanisme de formation.

5. Procédé selon la revendication 1, dans lequel le troisième poste est un composant séparé du quatrième poste.

6. Procédé selon la revendication 1, dans lequel un diamètre fini de la calotte de piston est environ inférieur à 200 millimètres.
